# EUROPÄISCHE PATENTSCHRIFT

(11) **EP 3 086 993 B1**
(45) Veröffentlichungstag und Bekanntmachung des Hinweises auf die Patenterteilung: **18.10.2017**
(21) Anmeldenummer: 14799485.9
(22) Anmeldetag: 19.11.2014
(51) Int. Cl.: B62D 15/02

(54) **VERFAHREN ZUM DURCHFÜHREN EINES EINPARKVORGANGS EINES KRAFTFAHRZEUGS IN EINE QUERPARKLÜCKE, PARKASSISTENZSYSTEM UND KRAFTFAHRZEUG**
METHOD FOR CARRYING OUT A PARKING PROCESS OF A MOTOR VEHICLE INTO A TRANSVERSE PARKING SPACE, PARKING ASSISTANCE SYSTEM AND MOTOR VEHICLE
PROCÉDÉ D'EXÉCUTION D'UN PROCESSUS DE STATIONNEMENT D'UN VÉHICULE AUTOMOBILE DANS UNE PLACE DE STATIONNEMENT EN ÉPI, SYSTÈME D'ASSISTANCE AU STATIONNEMENT ET VÉHICULE AUTOMOBILE

(30) Priorität: 19.12.2013 DE 102013114563
(43) Veröffentlichungstag der Anmeldung: 02.11.2016
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: TERKES, Mehmet, 38102 Braunschweig (DE); GEIGER, Tobias, 74321 Bietigheim-Bissingen (DE); LICHTENHAGEN, Jörn Karl Friedrich, 74321 Bietigheim-Bissingen (DE)
(74) Vertreter: Hofstetter, Schurack & Partner
(86) Internationale Anmeldenummer: PCT/EP2014/074972
(87) Internationale Veröffentlichungsnummer: WO 2015/090813

(56) Entgegenhaltungen:
- EP-A2- 2 620 351
- JP-A- 2009 101 774
- US-A1- 2011 006 917
- US-A1- 2013 116 879

## Beschreibung

Die Erfindung betrifft ein Verfahren zum Durchführen eines Einparkvorgangs eines Kraftfahrzeugs in eine Querparklücke mittels eines Parkassistenzsystems des Kraftfahrzeugs, wobei durch eine Sensoreinrichtung des Parkassistenzsystems Umgebungsinformationen zu einer Umgebung des Kraftfahrzeugs erfasst werden und durch eine Steuereinrichtung des Parkassistenzsystems abhängig von den Umgebungsinformationen die Querparklücke detektiert wird und Steuersignale zumindest an ein Lenksystem des Kraftfahrzeugs abgegeben werden, durch welche das Kraftfahrzeug von einer aktuellen Position durch eine Eintrittsseite der Querparklücke hindurch in die Querparklücke geführt bzw. gesteuert wird. Die Erfindung betrifft außerdem ein Parkassistenzsystem zum Durchführen eines solchen Verfahrens sowie ein Kraftfahrzeug mit einem derartigen Parkassistenzsystem.

Es sind bereits Parkassistenzsysteme bzw. Fahrerassistenzeinrichtungen aus dem Stand der Technik bekannt, welche den Fahrer eines Kraftfahrzeugs beim Durchführen von Einparkvorgängen unterstützen. Diesbezüglich wird zwischen sogenannten semi-autonomen (halbautomatischen) Systemen einerseits und vollautomatischen Systemen andererseits unterschieden. Allen Systemen ist dabei gemein, dass eine potentielle Parklücke detektiert und eine Abmessung der Parklücke erfasst und dann mit einer abgelegten Mindestabmessung verglichen wird. Ist die erfasste Abmessung der detektierten Parklücke mindestens gleich der Mindestabmessung, so wird dem Fahrer die Möglichkeit des Einparkvorgangs signalisiert. Das System ermittelt dann die aktuelle relative Position des Kraftfahrzeugs bezüglich der Parklücke und berechnet eine Parkbahn (Parktrajektorie), entlang welcher das Kraftfahrzeug in die Parklücke kollisionsfrei eingeparkt werden kann. Bei semi-autonomen Parkassistenzsystemen wird es dem Fahrer zugeteilt, Gas zu geben und zu bremsen. Bei semi-autonomen Parkassistenzsystemen wird die Längsführung des Kraftfahrzeugs also durch den Fahrer selbst gesteuert, während die Steuerung der Querführung durch das Parkassistenzsystem selbst erfolgt, indem entsprechende Steuersignale an ein Lenksystem des Kraftfahrzeugs abgegeben werden. Bei vollautomatischen Parkassistenzsystemen hingegen wird sowohl die Längsführung als auch die Querführung automatisch durch das Parkassistenzsystem durchgeführt, indem entsprechende Steuersignale sowohl an das Lenksystem als auch an einen Antriebsstrang und ein Bremssystem des Kraftfahrzeugs abgegeben werden. Bei vollautomatischen Systemen braucht der Fahrer den Einparkvorgang lediglich freizugeben und kann diesen auch jederzeit unterbrechen.

Ein Parkassistenzsystem ist beispielsweise aus der Druckschrift WO 2008/055567 A1 bekannt. Das Dokument WO 2008/055567 A1 ist als nächstliegender Stand der Technik nach dem Oberbegriff des Anspruchs 1 zu sehen. Zur Erfassung von Parklücken werden üblicherweise Ultraschallsensoren eingesetzt, die im vorderen Bereich des Kraftfahrzeugs an den jeweiligen Seitenflanken angebracht sind. Während einer Vorbeifahrt des Kraftfahrzeugs an einer potentiellen Parklücke misst der Ultraschallsensor fortlaufend den seitlichen Abstand des Kraftfahrzeugs zu fahrzeugexternen Hindernissen bzw. Objekten. Anhand des Verlaufs der Messwerte des Ultraschallsensors sowie unter Berücksichtigung der zurückgelegten Wegstrecke kann dann die Abmessung der Parklücke in Längsrichtung des Kraftfahrzeugs bzw. in Längsrichtung der Fahrbahn sowie die relative Position der Parklücke bezüglich des Kraftfahrzeugs bestimmt werden. Dies gilt sowohl für Längsparklücken, deren Längsachse im Wesentlichen parallel zur Fahrbahn orientiert ist, als auch für Querparklücken, deren Längsachse senkrecht oder in einem spitzen Winkel zur Fahrbahn verläuft. Ein derartiges Detektionsverfahren ist beispielsweise aus dem Dokument EP 0 305 907 B1 bekannt.

Es sind aber auch Parkassistenzsysteme bekannt, bei denen die Detektion einer Parklücke auch ohne eine vorherige Vorbeifahrt des Kraftfahrzeugs an der Parklücke möglich ist. So beschreibt beispielsweise das Dokument DE 10 2005 046 827 A1 ein Verfahren zur Einparkunterstützung, bei welchem bei einer noch nicht abgeschlossenen, zumindest partiellen Positionierung des Fahrzeugs in der Parklücke die Abmessungen der Parklücke bestimmt werden und eine Trajektorie bzw. Parkbahn des Fahrzeugs zum Abschluss des Parkvorgangs bestimmt wird. Der Einparkvorgang wird hier durch den Fahrer selbst begonnen und erst nach einer Detektion der Parklücke durch das Parkassistenzsystem automatisiert abgeschlossen.

Aus der Druckschrift DE 10 2011 122 421 A1 ist ein Verfahren zum Einparken eines Kraftfahrzeugs in eine Querparklücke bekannt, bei welchem zunächst eine Ausgangsposition des Kraftfahrzeugs relativ zur Parklücke erreicht wird und in der Ausgangsposition die Fahrzeuglängsachse mit der Parklückenlängsachse einen Winkel kleiner 60° einschließt. In dieser Ausgangsposition können jeweilige Flanken von Fahrzeugen detektiert werden, durch welche die Parklücke seitlich begrenzt ist. Unter Berücksichtigung der detektierten Flanken wird dann eine Parkbahn von der Ausgangsposition zu einer Zielposition bestimmt, und das Kraftfahrzeug wird automatisiert entlang der Parkbahn geführt. Die Bestimmung der Zielposition in der Parklücke erfolgt hier demnach anhand der detektierten Flanken der seitlichen Fahrzeuge.

Ein Verfahren zur Steuerung eines Parkassistenzsystems eines Fahrzeugs ist des Weiteren aus dem Dokument DE 10 2007 027 438 A1 bekannt. Eine Zielposition in einer Parklücke wird hier abhängig davon bestimmt, ob ein Fahrzeuginsasse auf der Beifahrerseite detektiert wird oder nicht.

Bei einem Verfahren gemäß EP 1 249 379 B1 wird nach einer ersten fahrerseitigen Aktivierung die Umgebung des Fahrzeugs zur Detektion einer Zielposition fortlaufend abgetastet und die aktuelle Fahrzeugposition fortlaufend ermittelt. Anhand der ermittelten Umgebungs- und Positionsinformationen werden dann Steuersignale für das Verbringen des Fahrzeugs in die Zielposition ermittelt. Danach werden abhängig von einer zweiten fahrerseitigen Aktivierung von den Steuersignalen abhängige Steuerbefehle an den Antriebsstrang und/oder die Bremsanlage und/oder die Lenkung des Kraftfahrzeugs abgegeben, wodurch das Fahrzeug fahrerunabhängig in die Zielposition geführt wird.

Ein Verfahren zum Unterstützen eines Fahrers eines Kraftfahrzeugs beim Einparken in eine Querparklücke ist des Weiteren aus dem Dokument DE 10 2009 039 084 A1 bekannt. Durch eine Sensoreinrichtung werden Umgebungsinformationen erfasst, und abhängig von den Umgebungsinformationen wird eine Parkbahn bestimmt, entlang welcher das Kraftfahrzeug zumindest semi-autonom vorwärts in die Querparklücke eingeparkt wird. Eine Zielposition des Fahrzeugs in der Parklücke wird dabei derart bestimmt, dass sämtliche Punkte der Fahrzeugmittellängsachse den gleichen Abstand zu seitlichen Begrenzungen der Parklücke aufweisen. Bei der Bestimmung der Zielposition in der Parklücke orientiert sich das Parkassistenzsystem also an den seitlichen Objekten, welche die Parklücke seitlich unmittelbar begrenzen.

Ein Verfahren zum Einparken eines Fahrzeugs in eine Parklücke ohne eine vorherige Vorbeifahrt an der Parklücke ist darüber hinaus aus dem Dokument DE 10 2010 056 064 A1 bekannt.

Im Stand der Technik wird für die Durchführung eines semi-autonomen oder vollautomatischen Einparkvorgangs eines Kraftfahrzeugs in eine Querparklücke also insgesamt vorausgesetzt, dass eine seitliche Begrenzung der Parklücke detektiert werden kann, durch welche die Parklücke in Parklückenquerrichtung begrenzt ist. Erst nach Detektion der seitlichen Begrenzung, sei es eines anderen Fahrzeugs, sei es einer Markierung, kann eine Zielposition bzw. Parkposition in der Parklücke bestimmt und eine entsprechende Parkbahn berechnet werden, entlang welcher dann das Kraftfahrzeug semi-autonom oder vollautomatisch durch das Parkassistenzsystem geführt werden kann. In Situationen, in denen keine ausgedehnten seitlichen Begrenzungen detektiert werden und die Querparklücke zumindest einseitig beispielsweise durch einen Pfeiler oder dergleichen begrenzt ist, ist die Bestimmung der tatsächlichen Ausrichtung der Parklücke und somit die Bestimmung der Zielposition und entsprechend die Ermittlung einer geeigneten Parkbahn nicht möglich. Solche Szenarien treten beispielsweise in Parkhäusern auf, in denen mehrere Querparklücken ausschließlich durch Pfeiler voneinander getrennt sind. Als nachteilig an dem Stand der Technik ist des Weiteren der Umstand anzusehen, dass die Bestimmung der Zielposition in der Parklücke anhand der seitlichen Begrenzungen nur unzureichend ist, da es beispielsweise vorkommen kann, dass ein die Parklücke begrenzendes Fahrzeug schräg geparkt ist, d.h. unter einem spitzen Winkel bezüglich der Parklückenlängsrichtung. Dies führt dann dazu, dass auch das Ego-Kraftfahrzeug durch das Parkassistenzsystem schräg in die detektierte Parklücke eingeparkt wird.

Es ist Aufgabe der Erfindung, eine Lösung aufzuzeigen, wie bei einem Verfahren der eingangs genannten Gattung der Einparkvorgang des Kraftfahrzeugs besonders zuverlässig durch das Parkassistenzsystem durchgeführt werden kann, insbesondere auch bei Fehlen von seitlichen Begrenzungen oder bei relativ kleinen, punktförmigen seitlichen Begrenzungen, etwa in Form eines Pfeilers oder dergleichen.

Diese Aufgabe wird erfindungsgemäß durch ein Verfahren, durch ein Parkassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Durchführen eines Einparkvorgangs eines Kraftfahrzeugs in eine Querparklücke mittels eines Parkassistenzsystems des Kraftfahrzeugs. Durch eine Sensoreinrichtung des Parkassistenzsystems werden - insbesondere fortlaufend - Umgebungsinformationen zu einer Umgebung des Kraftfahrzeugs erfasst. Durch eine Steuereinrichtung des Parkassistenzsystems wird die Querparklücke abhängig von den Umgebungsinformationen detektiert. Die Steuereinrichtung gibt dann Steuersignale zumindest an ein Lenksystem des Kraftfahrzeugs ab, um das Kraftfahrzeug von einer aktuellen Position durch eine Eintrittsseite der Querparklücke hindurch in die Querparklücke zu steuern. Durch das Parkassistenzsystem wird anhand der Umgebungsinformationen eine hintere Begrenzung detektiert, welche die Querparklücke in Parklückenlängsrichtung auf einer der Eintrittsseite gegenüberliegenden Rückseite begrenzt. Eine Zielausrichtung des Kraftfahrzeugs für eine Zielposition in der Parklücke wird dann anhand der hinteren Begrenzung durch das Parkassistenzsystem bestimmt.

Der erfindungsgemäße Effekt wird demnach dadurch erzielt, dass anhand der Umgebungsinformationen eine die Querparklücke in Parklückenlängsrichtung begrenzende, hintere Begrenzung - beispielsweise eine Wand und/oder eine Markierung - detektiert und dazu genutzt wird, um eine Zielausrichtung des Kraftfahrzeugs für die Zielposition bzw. Parkposition durch das Parkassistenzsystem selbst festzulegen, d.h. eine Orientierung der Fahrzeuglängsachse bezüglich der Parklückenlängsachse. Die Festlegung der Zielausrichtung des Kraftfahrzeugs bzw. der Parkposition kann somit besonders zuverlässig auch bei Fehlen von ausgedehnten seitlichen Begrenzungen bzw. auch in Situationen erfolgen, in denen die Bestimmung der Zielausrichtung anhand von seitlichen Begrenzungen nicht möglich ist. Das erfindungsgemäße Verfahren erweist sich insbesondere in Situationen als besonders vorteilhaft, in denen die Querparklücke zumindest einseitig durch ein punktförmiges Objekt begrenzt ist, wie beispielsweise durch einen Pfeiler oder dergleichen. In solchen Situationen wird die Ausrichtung des Kraftfahrzeugs in der Zielposition anhand der hinteren Begrenzung bestimmt. Ein weiterer Vorteil des erfindungsgemäßen Verfahrens besteht darin, dass das Kraftfahrzeug immer senkrecht zur hinteren Begrenzung eingeparkt werden kann, und zwar unabhängig davon, ob ein die Parklücke seitlich begrenzendes Fahrzeug schräg geparkt ist oder nicht.

Unter einer "Querparklücke" wird insbesondere eine Parklücke verstanden, deren Längsachse bzw. Längsrichtung senkrecht zu einer an die Parklücke angrenzenden Fahrbahn orientiert ist. Insbesondere kann es sich bei der Querparklücke um einen Parkplatz in einem Parkhaus oder einer Garage handeln.

Durch die Steuereinrichtung werden die Steuersignale zumindest an das Lenksystem des Kraftfahrzeugs abgegeben. Dies bedeutet, dass das Parkassistenzsystem zum Durchführen eines zumindest semi-autonomen Parkvorgangs ausgebildet ist. Wird der Einparkvorgang vollautomatisch durchgeführt, so können entsprechende Steuersignale auch an einen Antriebsstrang und/oder ein Bremssystem des Kraftfahrzeugs abgegeben werden, um auch die Längsführung des Kraftfahrzeugs automatisiert durchzuführen.

Bei dem erfindungsgemäßen Verfahren kann der Einparkvorgang vorwärts und/oder rückwärts durchgeführt werden. Das Verfahren kann also für das Einparken vorwärts und/oder für das Einparken rückwärts angewendet werden.

Die Zielausrichtung für die Zielposition in der Querparklücke wird vorzugsweise derart festgelegt, dass in der Zielposition die Fahrzeuglängsachse mit der hinteren Begrenzung einen Winkel in einem Wertebereich von 80°bis 100° einschließt, insbesondere in einem Wertebereich von 85°bis 95°. Die Zielausrichtung i st bevorzugt eine senkrechte Ausrichtung der Fahrzeuglängsachse relativ zur hinteren Begrenzung. Somit kann das Kraftfahrzeug immer mittig in der Querparklücke eingeparkt werden.

Die Detektion der hinteren Begrenzung kann auch dazu genutzt werden, um die Tiefe der Querparklücke und somit die Zielposition des Kraftfahrzeugs in der Parklücke zu bestimmen. Beispielsweise kann die Zielposition derart bestimmt werden, dass in dieser Zielposition das Kraftfahrzeug in einem vorgegebenen Abstand zur hinteren Begrenzung positioniert ist.

Als hintere Begrenzung kann in einer Ausführungsform ein längliches Objekt, insbesondere eine Leitplanke und/oder eine Wand, detektiert werden. Eine solche Begrenzung lässt sich ohne viel Aufwand mit Hilfe eines Abstandssensors detektieren, beispielsweise mittels eines Ultraschallsensors. Da solche Abstandssensoren bei heutigen Fahrzeugen üblicherweise standardmäßig vorhanden sind, erübrigt sich somit der Einsatz von weiteren Sensoren mit den damit verbundenen Nachteilen.

Ergänzend oder alternativ kann als hintere Begrenzung auch eine auf dem Boden aufgebrachte Markierung detektiert werden. Eine solche Markierung kann beispielsweise anhand von Bilddaten einer Kamera detektiert werden. Diese Ausführungsform ist insbesondere dann besonders vorteilhaft, wenn sich in Parklückenlängsrichtung hinter der hinteren Begrenzung eine weitere Parklücke befindet und diese beiden Parklücken durch keine Leitplanke oder dergleichen voneinander getrennt sind. Die Steuereinrichtung detektiert hier die Markierung, durch welche die beiden Parklücken voneinander getrennt sind.

Es kann in einer Ausführungsform vorgesehen sein, dass durch die Steuereinrichtung anhand der Umgebungsinformationen überprüft wird, ob in Parklückenquerrichtung die Querparklücke durch ein längliches bzw. ausgedehntes seitliches Objekt begrenzt ist, welches sich entlang der Querparklücke und neben dieser erstreckt und somit eine Bestimmung der Ausrichtung der Parklücke und somit auch der Zielausrichtung des Kraftfahrzeugs in der Zielposition ermöglicht. Wird ein solches seitliches Objekt detektiert, kann die Zielausrichtung anhand der hinteren Begrenzung und/oder anhand des seitlichen Objekts bestimmt werden. Gegebenenfalls können zur Festlegung der Zielausrichtung sowohl die hintere Begrenzung als auch das seitliche Objekt verwendet werden. Wird hingegen kein seitliches Objekt detektiert, welches die Bestimmung der Zielausrichtung ermöglicht, kann die Zielausrichtung alleine anhand der hinteren Begrenzung bestimmt werden. Durch diese zusätzliche Überprüfung kann die Bestimmung der Zielausrichtung bzw. der Parkposition in der Parklücke noch zuverlässiger und bedarfsgerechter erfolgen.

Wird die Querparklücke durch die Steuereinrichtung detektiert, wird diese Detektion bevorzugt dem Fahrer signalisiert. Der Fahrer hat nun die Möglichkeit, den zumindest semi-autonomen Einparkvorgang zu aktivieren oder die Aktivierung abzulehnen. Der Einparkvorgang wird durch das Parkassistenzsystem somit unter der Voraussetzung durchgeführt, dass der Fahrer eine entsprechende Bestätigungseingabe an einer Eingabeeinrichtung vornimmt. Diese Bestätigungseingabe wird durch die Steuereinrichtung empfangen, woraufhin der Einparkvorgang dann aktiviert wird. Die Aktivierung des Einparkvorgangs kann optional auch entsprechend signalisiert werden. Eine weitere Voraussetzung für die Aktivierung des Einparkvorgangs kann auch beinhalten, dass das Kraftfahrzeug stillsteht und/oder ein vorbestimmter Gang eingelegt ist, nämlich insbesondere der Rückwärtsgang für das Einparken rückwärts und/oder der erste Gang für das Einparken vorwärts.

Die Detektion der Querparklücke kann grundsätzlich auch ohne eine Vorbeifahrt des Kraftfahrzeugs an der Parklücke erfolgen. Die Querparklücke kann somit beispielsweise im Stillstand des Kraftfahrzeugs und/oder bei einer Annäherung des Kraftfahrzeugs an die Parklücke anhand der aktuellen Umgebungsinformationen detektiert werden. Es ist aber auch möglich, die Parklücke anhand von Umgebungsinformationen zu detektieren, welche während einer Vorbeifahrt des Kraftfahrzeugs an der Parklücke erfasst werden.

Vorzugsweise wird durch die Steuereinrichtung nach Detektion der Querparklücke eine Parkbahn von der aktuellen Position zumindest zu einer Zwischenposition zwischen der aktuellen Position und der Zielposition ermittelt. Das Kraftfahrzeug wird dann entlang der ermittelten Parkbahn zumindest semi-autonom durch die Steuereinrichtung geführt und kann somit entlang der Parkbahn kollisionsfrei in die Querparklücke eingeparkt werden.

Bezüglich der Detektion der Querparklücke durch die Steuereinrichtung können grundsätzlich zwei Szenarien auftreten: Bei der Detektion der Querparklücke kann gleichzeitig auch die hintere Begrenzung der Parklücke detektiert werden, sodass die Detektion der Querparklücke auch anhand der hinteren Begrenzung erfolgt. Dies ist insbesondere dann möglich, wenn als Umgebungsinformationen Bilddaten mittels einer Kamera bereitgestellt werden. Anhand derartiger Bilddaten lässt sich die hintere Begrenzung nämlich auch aus einer relativ großen Entfernung detektieren. Andererseits kann es aber auch vorkommen, dass zum Zeitpunkt der Detektion der Querparklücke die hintere Begrenzung noch nicht detektiert werden kann. Dies kann beispielsweise dann der Fall sein, wenn als Umgebungsinformationen Abstandswerte mittels eines Abstandssensors, beispielsweise eines Ultraschallsensors, erfasst werden. Die Reichweite eines Ultraschallsensors beträgt nämlich üblicherweise ca. 4 m und kann somit kleiner als die Länge des Kraftfahrzeugs selbst und somit die Länge der Querparklücke sein. In solchen Fällen kann die Querparklücke beispielsweise anhand von seitlichen Begrenzungen detektiert werden, auch wenn diese durch einen Pfeiler oder ein anderes punktförmiges Objekt gebildet sind. Gegebenenfalls kann die Parklücke aber auch erst dann detektiert werden, wenn sich das Kraftfahrzeug bereits teilweise innerhalb der Parklücke befindet und das Parkassistenzsystem die hintere Begrenzung detektieren kann.

Wird die Querparklücke anhand zumindest einer die Querparklücke in Parklückenquerrichtung seitlich begrenzenden Begrenzung - beispielsweise eines Objekts und/oder einer Markierung - detektiert und wird die hintere Begrenzung erst beim Befahren der Parkbahn und somit erst während des bereits begonnen Einparkvorgangs detektiert, so kann die Parkbahn nach Detektion der hinteren Begrenzung durch die Steuereinrichtung anhand der aktuellen Umgebungsinformationen bzw. anhand der detektierten hinteren Begrenzung korrigiert und/oder vervollständigt werden. Somit kann der Einparkvorgang auch ohne die Information über die hintere Begrenzung zumindest semi-autonom begonnen und dann trotzdem zuverlässig abgeschlossen werden, indem anhand der detektierten hinteren Begrenzung die Ausrichtung des Kraftfahrzeugs korrigiert wird.

Wird die hintere Begrenzung hingegen bereits bei der Detektion der Querparklücke detektiert, kann die Parkbahn von der aktuellen Position zur Zielposition unter Berücksichtigung der hinteren Begrenzung ermittelt werden. Während des Einparkvorgangs können die Umgebungsinformationen fortlaufend erfasst werden, und durch die Steuereinrichtung kann anhand der jeweils aktuellen Umgebungsinformationen fortlaufend überprüft werden, ob eine Differenz zwischen der ursprünglich bei der Berechnung der Parkbahn angenommenen bzw. ermittelten Position der hinteren Begrenzung einerseits und einer anhand der aktuellen Umgebungsinformationen ermittelten tatsächlichen Position der hinteren Begrenzung andererseits eine vorgegebene Schwelle überschreitet. Wird die Schwelle überschritten, kann die ursprünglich ermittelte Parkbahn anhand der aktuellen Umgebungsinformationen korrigiert werden.

Allgemein gesagt kann also in einer Ausführungsform vorgesehen sein, dass die Umgebungsinformationen durch die Steuereinrichtung fortlaufend während des Einparkvorgangs erfasst werden und die Parkbahn durch die Steuereinrichtung anhand der aktuellen Umgebungsinformationen korrigiert, insbesondere fortlaufend korrigiert, wird. Somit kann der Einparkvorgang besonders zuverlässig durchgeführt und auch bei Fehlern bei der initialen Parkbahnberechnung exakt abgeschlossen werden.

Wie bereits ausgeführt, können als Umgebungsinformationen Abstandswerte mittels zumindest eines Abstandssensors, insbesondere mittels einer Mehrzahl von Abstandssensoren, der Sensoreinrichtung erfasst werden. Somit können zur Erfassung von Umgebungsinformationen auch ohnehin bereits vorhandene Abstandssensoren, beispielsweise Ultraschallsensoren, verwendet werden.

Zur Erfassung von Umgebungsinformationen kann die Steuereinrichtung auch eine Kamera umfassen, mittels welcher Bilddaten bzw. Bilder der Fahrzeugumgebung bereitgestellt werden. Anhand von Bilddaten kann die hintere Begrenzung bereits frühzeitig bzw. aus einer größeren Entfernung detektiert und somit bei der Berechnung der Parkbahn berücksichtigt werden.

Die Erfindung betrifft auch ein Parkassistenzsystem zum Durchführen eines Einparkvorgangs eines Kraftfahrzeugs in eine Querparklücke, mit einer Sensoreinrichtung zum Erfassen von Umgebungsinformationen zu einer Umgebung des Kraftfahrzeugs, und mit einer Steuereinrichtung, die abhängig von den Umgebungsinformationen die Querparklücke detektiert und zumindest an ein Lenksystem des Kraftfahrzeugs Steuersignale abgibt, durch welche das Kraftfahrzeug von einer aktuellen Position durch eine Eintrittsseite der Querparklücke hindurch in die Querparklücke geführt wird. Anhand der Umgebungsinformationen detektiert die Steuereinrichtung eine hintere Begrenzung, welche die Querparklücke auf einer der Eintrittsseite gegenüberliegenden Rückseite in Parklückenlängsrichtung begrenzt. Die Steuereinrichtung bestimmt dann eine Zielausrichtung des Kraftfahrzeugs für eine Zielposition in der Querparklücke anhand der hinteren Begrenzung.

Ein erfindungsgemäßes Kraftfahrzeug, insbesondere ein Personenkraftwagen, umfasst ein erfindungsgemäßes Parkassistenzsystem.

Die mit Bezug auf das erfindungsgemäße Verfahren vorgestellten bevorzugten Ausführungsformen und deren Vorteile gelten entsprechend für das erfindungsgemäße Parkassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nachfolgend anhand einzelner bevorzugter Ausführungsbeispiele sowie unter Bezugnahme auf die beigefügten Zeichnungen näher erläutert.

Es zeigen:
- Fig. 1: in schematischer Darstellung ein Kraftfahrzeug mit einem Parkassistenzsystem gemäß einer Ausführungsform der Erfindung; und
- Fig. 2 bis 5: verschiedene Parkszenarien zur Erläuterung eines Verfahrens gemäß einer Ausführungsform der Erfindung.

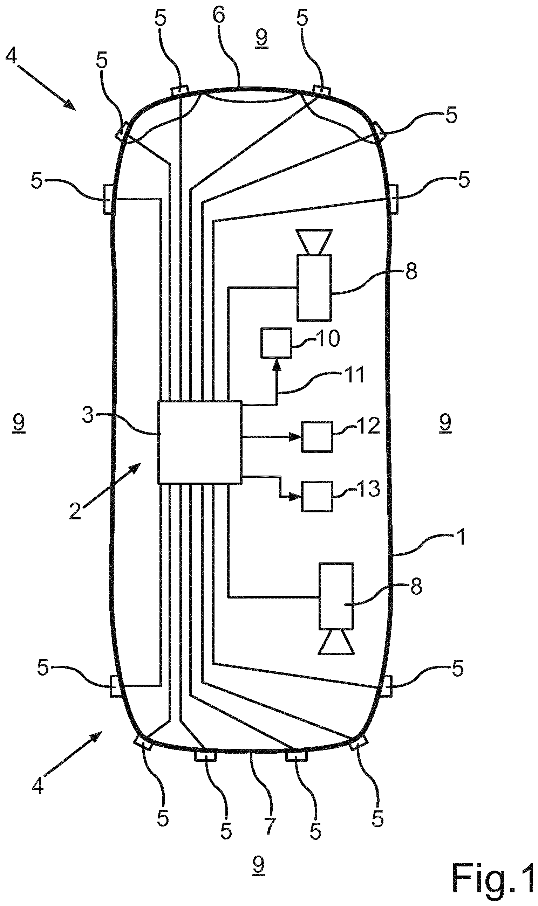

Ein in Fig. 1 dargestelltes Kraftfahrzeug 1 ist beispielsweise ein Personenkraftwagen. Das Kraftfahrzeug 1 umfasst ein Parkassistenzsystem 2, welches zur Detektion von Parklücken sowie zum Durchführen von semi-automatischen oder vollautomatischen Parkvorgängen ausgebildet ist. Bei vollautomatischen Parkassistenzsystemen 2 übernimmt das System sowohl die Längsführung als auch die Querführung des Kraftfahrzeugs 1, während bei semi-automatischen bzw. halbautonomen Systemen lediglich die Querführung und somit die Lenkung automatisiert gesteuert wird, während der Fahrer selbst beschleunigen und bremsen muss.

Das Parkassistenzsystem 2 umfasst eine zentrale Steuereinrichtung 3, welche beispielsweise einen digitalen Signalprozessor und/oder einen Mikrocontroller beinhalten kann. Die Steuereinrichtung 3 ist mit einer Sensoreinrichtung 4 gekoppelt, welche im Ausführungsbeispiel eine Vielzahl von Abstandssensoren 5, insbesondere Ultraschallsensoren, aufweist, welche sowohl an einem vorderen Stoßfänger 6 als auch an einem hinteren Stoßfänger 7 verteilt angeordnet sind. Zumindest ein Abstandssensor 5 ist dabei an der jeweiligen Seitenflanke des Kraftfahrzeugs 1 angeordnet. Optional kann die Sensoreinrichtung 4 mindestens eine Kamera 8 umfassen, nämlich insbesondere eine Frontkamera und/oder eine Rückfahrkamera bzw. Rückansichtskamera.

Die Sensoreinrichtung 4 erfasst Umgebungsinformationen zu einer Umgebung 9 des Kraftfahrzeugs 1. Als Umgebungsinformationen werden dabei Abstandswerte durch die Abstandssensoren 5 und/oder Bilddaten durch die zumindest eine Kamera 8 bereitgestellt. Die Umgebungsinformationen werden an die zentrale Steuereinrichtung 3 übermittelt, welche auf der Grundlage der Umgebungsinformationen die semi-autonomen oder vollautomatischen Parkvorgänge durchführen kann.

Die Steuereinrichtung 3 ist mit einem Lenksystem 10 des Kraftfahrzeugs 1 gekoppelt und kann Steuersignale 11 an das Lenksystem 10 abgeben, um die Querführung des Kraftfahrzeugs 1 durchzuführen. Bei einem vollautomatischen Parkassistenzsystem 2 ist die Steuereinrichtung 3 auch mit einem Antriebsstrang 12 bzw. einem Antriebsmotor sowie einem Bremssystem 13 des Kraftfahrzeugs 1 gekoppelt und kann somit auch die Längsführung des Kraftfahrzeugs 1 durchführen, d.h. automatisiert Gas geben und bremsen.

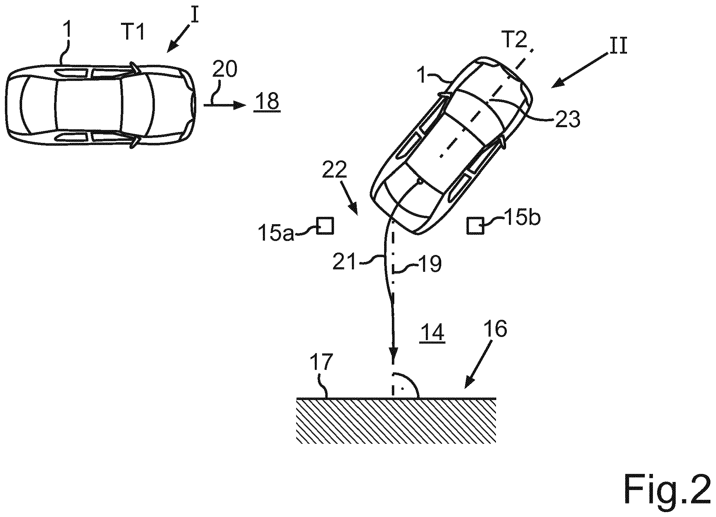

Ein erstes Parkszenario, bei welchem das Kraftfahrzeug 1 zumindest semi-autonom in eine Querparklücke 14 eingeparkt wird, ist in Fig. 2 dargestellt. Das Kraftfahrzeug 1 befindet sich beispielsweise in einem Parkhaus, in welchem mehrere solche Querparklücken 14 vorhanden sind, die nur durch Pfeiler 15a, 15b seitlich und somit in Parklückenquerrichtung voneinander getrennt sind. Auf einer Rückseite 16 ist die Querparklücke 14 in Parklückenlängsrichtung 19 durch eine hintere Begrenzung 17 begrenzt, im Ausführungsbeispiel eine Wand. Diese hintere Begrenzung 17 liegt einer Eintrittsseite 22 gegenüber, durch welche hindurch das Kraftfahrzeug 1 in die Querparklücke 14 eingeparkt wird.

Zum Zeitpunkt T1 befindet sich das Kraftfahrzeug 1 in einer Position I auf einer Fahrbahn 18, welche an die Querparklücke 14 unmittelbar angrenzt und sich senkrecht zur Parklückenlängsachse bzw. Parklückenlängsrichtung 19 erstreckt. Das Kraftfahrzeug 1 bewegt sich auf der Fahrbahn 18 gemäß der Pfeildarstellung 20 und fährt an der Querparklücke 14 vorbei. Hinsichtlich der Detektion der Querparklücke 14 durch das Parkassistenzsystem 2 sind nun grundsätzlich zwei Ausführungsformen vorgesehen: Zum einen kann die Parklücke 14 während der Vorbeifahrt detektiert werden, indem die Steuereinrichtung 3 die beiden Pfeiler 15a, 15b detektiert und einen Abstand zwischen den Pfeilern 15a, 15b auswertet. Andererseits kann die Parklücke 14 anhand der Pfeiler 15a, 15b auch im Stillstand und/oder bei einer Annäherung des Kraftfahrzeugs 1 an die Parklücke 14 detektiert werden. Befindet sich das Kraftfahrzeug 1 zu einem späteren Zeitpunkt T2 in einer Position II, in welcher beispielsweise das Heck des Kraftfahrzeugs 1 in Richtung zur Querparklücke 14 zeigt, so können die beiden Pfeiler 15a, 15b auch im Stillstand anhand der Abstandswerte der Abstandssensoren 5 detektiert und die Querparklücke 14 erkannt werden. Der zumindest semi-automatische Parkvorgang kann dann von der Position II aus begonnen werden.

Wird die Querparklücke 14 durch die Steuereinrichtung 3 detektiert, wird diese Detektion dem Fahrer signalisiert. Der Fahrer hat nun die Möglichkeit, den zumindest semi-autonomen Einparkvorgang zu aktivieren oder die Aktivierung abzulehnen. Der Einparkvorgang wird durch das Parkassistenzsystem 2 somit unter der Voraussetzung durchgeführt, dass der Fahrer eine entsprechende Bestätigungseingabe an einer Eingabeeinrichtung vornimmt. Die Aktivierung des Einparkvorgangs wird entsprechend signalisiert. Eine weitere Voraussetzung für die Aktivierung des Einparkvorgangs kann auch beinhalten, dass das Kraftfahrzeug stillsteht und/oder ein vorbestimmter Gang eingelegt ist, nämlich insbesondere der Rückwärtsgang für das Einparken rückwärts und/oder der erste Gang für das Einparken vorwärts.

Unabhängig davon, wie die Querparklücke 14 detektiert wird, berechnet die Steuereinrichtung 3 eine in Fig. 2 lediglich schematisch angedeutete Parkbahn 21, entlang welcher das Kraftfahrzeug 1 in die Querparklücke 14 durch die Eintrittsseite 22 hindurch kollisionsfrei eingeparkt werden kann, wobei die Eintrittsseite 22 der hinteren Begrenzung 17 bzw. der Rückseite 16 in Parklückenlängsrichtung 19 gegenüberliegt. Auch hinsichtlich der Bestimmung der Parkbahn 21 sind mehrere Szenarien möglich: Wird durch die Steuereinrichtung 3 in der aktuellen Position II die hintere Begrenzung 17 - beispielsweise anhand der Abstandswerte und/oder anhand der Bilddaten - detektiert, so kann die hintere Begrenzung 17 bereits bei der erstmaligen Berechnung der Parkbahn 21 berücksichtigt werden. Die Parkbahn 21 wird derart bestimmt, dass eine Zielausrichtung des Kraftfahrzeugs 1 in einer Zielposition (d.h. Parkposition) in der Parklücke 14 senkrecht zur hinteren Begrenzung 17 und somit parallel zur Parklückenlängsrichtung 19 orientiert ist. Kann zum Zeitpunkt T2 bzw. in der Position II die hintere Begrenzung 17 noch nicht detektiert werden, kann die Parkbahn 21 zunächst alleine anhand der Pfeiler 15a, 15b zumindest zu einer Zwischenposition bestimmt werden. Sobald die hintere Begrenzung 17 dann während des Parkens detektiert wird, kann die ursprünglich ermittelte Parkbahn 21 korrigiert und/oder bis zur Zielposition vervollständigt werden.

Gegebenenfalls kann die Parkbahn 21 auch derart festgelegt werden, dass das Kraftfahrzeug 1 mit mehreren Zügen in die Querparklücke 14 eingeparkt wird. Weitere Züge können auch nachträglich - d.h. während des Einparkens - hinzugefügt werden, wenn anhand der aktuellen Umgebungsinformationen detektiert wird, dass ein kollisionsfreies Abschließen des Parkvorgangs mit nur einem Zug nicht möglich ist und eine Korrektur der Parkbahn 21 vorgenommen werden muss.

Unabhängig davon, wann die hintere Begrenzung 17 tatsächlich detektiert wird, kann die Sensoreinrichtung 4 fortlaufend die Umgebungsinformationen erfassen und die Steuereinrichtung 3 fortlaufend anhand der jeweils aktuellen Umgebungsinformationen überprüfen, ob eine Korrektur der ursprünglich berechneten Parkbahn 21 erforderlich ist oder nicht. Hierbei überprüft die Steuereinrichtung 3 beispielsweise, ob eine Differenz zwischen der ursprünglich angenommenen Position der Querparklücke 14 und einer anhand der aktuellen Umgebungsinformationen ermittelten Position eine vorgegebene Schwelle überschreitet. Wird die Schwelle überschritten, kann die Parkbahn 21 korrigiert werden. Eine Korrektur der Parkbahn 21 kann auch dann erfolgen, wenn anhand der Umgebungsinformationen ein neues Hindernis detektiert wird, welches bei der initialen Berechnung der ursprünglichen Parkbahn 21 nicht berücksichtigt wurde.

Die fortlaufende Korrektur der Parkbahn 21 bedeutet also, dass sich das Kraftfahrzeug 1 zumindest semi-autonom in die Querparklücke 14 kollisionsfrei "hineintasten" kann. Wesentlich ist, dass die Zielausrichtung bzw. die Orientierung des Kraftfahrzeugs 1 in der Zielposition anhand der hinteren Begrenzung 17 festgelegt wird, insbesondere senkrecht zur hinteren Begrenzung 17. Dies bedeutet, dass in der Zielposition in der Querparklücke 14 die Fahrzeuglängsachse 23 mit der hinteren Begrenzung 17 einen rechten Winkel einschließt bzw. parallel zur Parklückenlängsrichtung 19 orientiert ist.

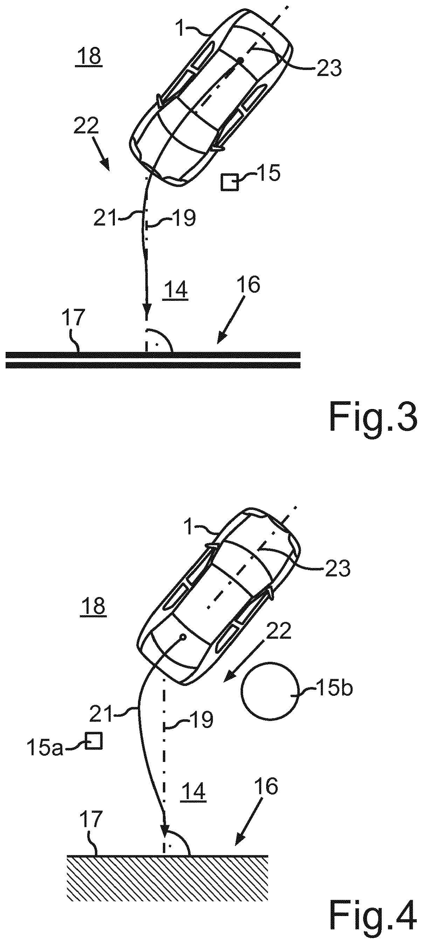

In Fig. 3 ist ein Szenario gezeigt, bei welchem das Kraftfahrzeug 1 vorwärts in eine Querparklücke 14 eingeparkt wird, deren hintere Begrenzung 17 durch eine Leitplanke gebildet ist. Seitlich ist die Querparklücke 14 lediglich durch einen einzigen Pfeiler 15 begrenzt. Auch hier kann die Zielausrichtung des Kraftfahrzeugs 1 in der Zielposition nicht anhand eines seitlichen Objekts festgelegt werden, da die Querparklücke 14 durch kein längliches bzw. ausgedehntes Objekt seitlich begrenzt ist. Die Parklücke 14 wird hier anhand des Pfeilers 15 und gegebenenfalls auch anhand der hinteren Begrenzung 17 detektiert. Diese Detektion kann sowohl bei einer Vorbeifahrt an der Querparklücke 14 als auch im Stillstand und/oder bei einer Annäherung an die Parklücke 14 und somit ohne eine vorherige Vorbeifahrt erfolgen. Im Szenario gemäß Fig. 3 ist es besonders vorteilhaft, wenn die hintere Begrenzung 17 bereits frühzeitig detektiert werden kann, und insbesondere auch zur Detektion der Querparklücke 14 verwendet werden kann. Dies kann insbesondere anhand von Bilddaten der zumindest einen Kamera 8 vorgenommen werden.

Auch im Szenario gemäß Fig. 3 wird eine Parkbahn 21 von der aktuellen Position in die Zielposition oder zumindest in eine Zwischenposition bestimmt. Diese Parkbahn 21 kann während des Einparkens auch fortlaufend korrigiert werden, indem die jeweils aktuellen Umgebungsinformationen berücksichtigt werden. Die Bestimmung der Zielausrichtung in der Zielposition erfolgt anhand der hinteren Begrenzung 17.

Die fortlaufende Korrektur der Parkbahn 21 erweist sich insbesondere auch im Szenario gemäß Fig. 4 als vorteilhaft, bei welchem die Querparklücke 14 durch Pfeiler 15a, 15b seitlich begrenzt ist, welche entlang der Parklückenlängsrichtung 19 auf unterschiedlicher Höhe positioniert sind. Bei der Detektion der Querparklücke 14 - insbesondere während einer Vorbeifahrt - wird hier zunächst lediglich eine Breite der Querparklücke 14 senkrecht zur Parklückenlängsrichtung 19 erfasst. Die genaue Position der Pfeiler 15a, 15b kann dann erst während des Einparkvorgangs erfasst und die Parkbahn 21 gegebenenfalls korrigiert werden. Gegebenenfalls kann hier der Einparkvorgang in mehreren Zügen abgeschlossen werden. Wie in den anderen Szenarien wird auch hier die Zielausrichtung für die Zielposition anhand der hinteren Begrenzung 17 derart bestimmt, dass die Fahrzeuglängsachse 23 parallel zur Parklückenlängsrichtung 19 verläuft.

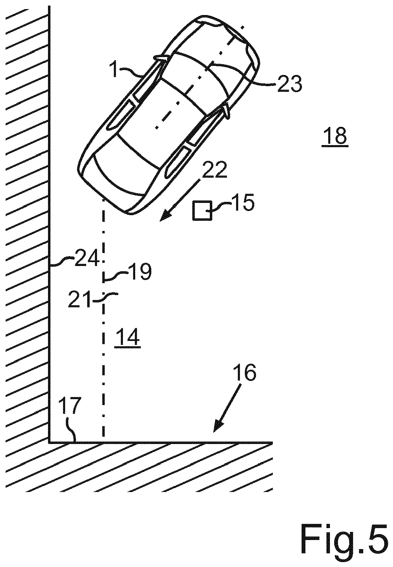

Durch die Steuereinrichtung 3 kann auch überprüft werden, ob die Querparklücke 14 seitlich und somit in Parklückenquerrichtung durch ein längliches bzw. ausgedehntes Objekt begrenzt ist, welches ebenfalls die Festlegung der Zielausrichtung ermöglicht. Ein solches Szenario ist beispielsweise in Fig. 5 dargestellt. Hier ist die Querparklücke 14 seitlich einerseits durch ein längliches Objekt 24 (hier eine Wand) und andererseits durch einen Pfeiler 15 begrenzt. Die Parklücke 14 wird hier durch die Steuereinrichtung 3 anhand des länglichen Objekts 24 und des Pfeilers 15 sowie gegebenenfalls anhand der hinteren Begrenzung 17 detektiert. Bei der Festlegung der Zielausrichtung für die Zielposition werden das längliche Objekt 24 und/oder die hintere Begrenzung 17 berücksichtigt. Um das Kraftfahrzeug 1 im Szenario gemäß Fig. 5 in die Querparklücke 14 einzuparken, kann eine mehrzügige Parkbahn bestimmt werden. Der Parkvorgang kann beispielsweise in mindestens drei Zügen abgeschlossen werden. Auch hier kann die Parkbahn fortlaufend anhand der jeweils aktuellen Umgebungsinformationen korrigiert und/oder vervollständigt werden.

## Patentansprüche

1. Verfahren zum Durchführen eines Einparkvorgangs eines Kraftfahrzeugs (1) in eine Querparklücke (14) mittels eines Parkassistenzsystems (2) des Kraftfahrzeugs (1), wobei durch eine Sensoreinrichtung (4) des Parkassistenzsystems (2) Umgebungsinformationen zu einer Umgebung (9) des Kraftfahrzeugs (1) erfasst werden und durch eine Steuereinrichtung (3) des Parkassistenzsystems (2) abhängig von den Umgebungsinformationen die Querparklücke (14) detektiert wird und Steuersignale (11) zumindest an ein Lenksystem (10) des Kraftfahrzeugs (1) abgegeben werden, durch welche das Kraftfahrzeug (1) von einer aktuellen Position durch eine Eintrittsseite (22) der Querparklücke (14) hindurch in die Querparklücke (14) geführt wird,
**dadurch gekennzeichnet, dass**
durch das Parkassistenzsystem (2) anhand der Umgebungsinformationen eine hintere Begrenzung (17) detektiert wird, welche die Querparklücke (14) auf einer der Eintrittsseite (22) gegenüberliegenden Rückseite (16) in Parklückenlängsrichtung (19) begrenzt, und eine Zielausrichtung des Kraftfahrzeugs (1) für eine Zielposition in der Querparklücke (14) anhand der hinteren Begrenzung (17) bestimmt wird.

2. Verfahren nach Anspruch 1,
**dadurch gekennzeichnet, dass**
die Zielausrichtung derart bestimmt wird, dass in der Zielposition die Fahrzeuglängsachse (23) mit der hinteren Begrenzung (17) einen Winkel in einem Wertebereich von 80°bis 100°, insbesondere in eine m Wertebereich von 85°bis 95°, einschließt.

3. Verfahren nach Anspruch 1 oder 2,
**dadurch gekennzeichnet, dass**
als hintere Begrenzung (17) ein längliches Objekt, insbesondere eine Leitplanke und/oder eine Wand, detektiert wird.

4. Verfahren nach einem der vorhergehenden Ansprüche,
**dadurch gekennzeichnet, dass**
als hintere Begrenzung (17) eine auf einem Boden aufgebrachte Markierung detektiert wird.

5. Verfahren nach einem der vorhergehenden Ansprüche,
**dadurch gekennzeichnet, dass**
durch die Steuereinrichtung (3) anhand der Umgebungsinformationen überprüft wird, ob in Parklückenquerrichtung die Querparklücke (14) durch ein seitliches Objekt (24) begrenzt ist, welches eine Bestimmung der Zielausrichtung ermöglicht, und:
- falls das seitliche Objekt (24) detektiert wird, die Zielausrichtung anhand der hinteren Begrenzung (17) und/oder anhand des seitlichen Objekts (24) bestimmt wird, und
- falls kein seitliches Objekt (24) detektiert wird, welches die Bestimmung der Zielausrichtung ermöglicht, die Zielausrichtung alleine anhand der hinteren Begrenzung (17) bestimmt wird.

6. Verfahren nach einem der vorhergehenden Ansprüche,
**dadurch gekennzeichnet, dass**
der Einparkvorgang durch das Parkassistenzsystem (2) unter der Voraussetzung durchgeführt wird, dass durch die Steuereinrichtung (3) eine von einem Fahrer an einer Eingabeeinrichtung vorgenommene Bestätigungseingabe empfangen wird, durch welche der Einparkvorgang aktiviert wird.

7. Verfahren nach einem der vorhergehenden Ansprüche,
**dadurch gekennzeichnet, dass**
durch die Steuereinrichtung (3) eine Parkbahn (21) von der aktuellen Position zumindest zu einer Zwischenposition zwischen der aktuellen Position und der Zielposition ermittelt und das Kraftfahrzeug (1) entlang der ermittelten Parkbahn (21) geführt wird.

8. Verfahren nach Anspruch 7,
**dadurch gekennzeichnet, dass**
falls die Querparklücke (14) anhand zumindest einer die Querparklücke (14) in Parklückenquerrichtung seitlich begrenzenden Begrenzung (15, 24) detektiert wird und die hintere Begrenzung (17) erst beim Befahren der Parkbahn (21) detektiert wird, die Parkbahn (21) nach Detektion der hinteren Begrenzung (17) durch die Steuereinrichtung (3) anhand der aktuellen Umgebungsinformationen korrigiert und/oder vervollständigt wird.

9. Verfahren nach Anspruch 7 oder 8,
**dadurch gekennzeichnet, dass**
während des Einparkvorgangs die Parkbahn (21) durch die Steuereinrichtung (3) anhand der aktuellen Umgebungsinformationen korrigiert, insbesondere fortlaufend korrigiert, wird.

10. Verfahren nach einem der vorhergehenden Ansprüche,
**dadurch gekennzeichnet, dass**
als Umgebungsinformationen Abstandswerte mittels zumindest eines Abstandssensors (5), insbesondere mittels einer Mehrzahl von Abstandssensoren (5), erfasst werden.

11. Verfahren nach einem der vorhergehenden Ansprüche,
**dadurch gekennzeichnet, dass**
als Umgebungsinformationen Bilddaten mittels einer Kamera (8) erfasst werden.

12. Parkassistenzsystem (2) zum Durchführen eines Einparkvorgangs eines Kraftfahrzeugs (1) in eine Querparklücke (14), mit einer Sensoreinrichtung (4) zum Erfassen von Umgebungsinformationen zu einer Umgebung (9) des Kraftfahrzeugs (1), und mit einer Steuereinrichtung (3), die dazu ausgelegt ist, abhängig von den Umgebungsinformationen die Querparklücke (14) zu detektieren und zumindest an ein Lenksystem (10) des Kraftfahrzeugs (1) Steuersignale (11) abzugeben, durch welche das Kraftfahrzeug (1) von einer aktuellen Position durch eine Eintrittsseite (22) der Querparklücke (14) hindurch in die Querparklücke (14) geführt wird, **dadurch gekennzeichnet, dass**
die Steuereinrichtung (3) dazu ausgelegt ist, anhand der Umgebungsinformationen eine hintere Begrenzung (17) zu detektieren, welche die Querparklücke (14) auf einer der Eintrittsseite (22) gegenüberliegenden Rückseite (16) in Parklückenlängsrichtung (19) begrenzt, und eine Zielausrichtung des Kraftfahrzeugs (1) für eine Zielposition in der Querparklücke (14) anhand der hinteren Begrenzung (17) zu bestimmen.

13. Kraftfahrzeug (1) mit einem Parkassistenzsystem (2) nach Anspruch 12.

## Claims

1. Method for performing a parking operation of a motor vehicle (1) into a transverse parking space (14) by means of a parking assistance system (2) of the motor vehicle (1), wherein environmental information to an environment (9) of the motor vehicle (1) is captured by a sensor device (4) of the parking assistance system (2) and the transverse parking space (14) is detected by a control device (3) of the parking assistance system (2) depending on the environmental information and control signals (11) are delivered at least to a steering system (10) of the motor vehicle (1), by which the motor vehicle (1) is guided from a current position through an entry side (22) of the transverse parking space (14) into the transverse parking space (14),
**characterized in that**
a rear boundary (17) is detected by the parking assistance system (2) based on the environmental information, which bounds the transverse parking space (14) on a rear side (16) opposing the entry side (22) in parking space longitudinal direction (19), and a target orientation of the motor vehicle (1) for a target position in the transverse parking space (14) is determined based on the rear boundary (17).

2. Method according to claim 1,
**characterized in that**
the target orientation is determined such that the vehicle longitudinal axis (23) forms an angle in a range of values from 80° to 100°, in particular in a range of values from 85° to 95°, with the rear boundary (17) in the target position.

3. Method according to claim 1 or 2,
**characterized in that**
an elongated object, in particular a guardrail and/or a wall is detected as the rear boundary (17).

4. Method according to any one of the preceding claims,
**characterized in that**
a marking applied to a ground is detected as the rear boundary (17).

5. Method according to any one of the preceding claims,
**characterized in that**
it is examined by the control device (3) based on the environmental information if the transverse parking space (14) is bounded by a lateral object (24) in parking space transverse direction, which allows determining the target orientation, and:
- if the lateral object (24) is detected, the target orientation is determined based on the rear boundary (17) and/or based on the lateral object (24), and
- if a lateral object (24) is not detected, which allows determining the target orientation, the target orientation is determined solely based on the rear boundary (17).

6. Method according to any one of the preceding claims,
**characterized in that**
the parking operation is performed by the parking assistance system (2) on condition that a confirming input performed by a driver at an input device is received by the control device (3), by which the parking operation is activated.

7. Method according to any one of the preceding claims,
**characterized in that**
by the control device (3), a parking trajectory (21) from the current position at least to an intermediate position between the current position and the target position is determined and the motor vehicle (1) is guided along the determined parking trajectory (21).

8. Method according to claim 7,
**characterized in that**
if the transverse parking space (14) is detected based on at least one boundary (15, 24) laterally bounding the transverse parking space (14) in parking space transverse direction and the rear boundary (17) is only detected in traversing the parking trajectory (21), the parking trajectory (21) is corrected and/or completed after detection of the rear boundary (17) by the control device (3) based on the current environmental information.

9. Method according to claim 7 or 8,
**characterized in that**
during the parking operation, the parking trajectory (21) is corrected, in particular continuously corrected, by the control device (3) based on the current environmental information.

10. Method according to any one of the preceding claims,
**characterized in that**
distance values are captured by means of at least one distance sensor (5), in particular by means of a plurality of distance sensors (5), as the environmental information.

11. Method according to any one of the preceding claims,
**characterized in that**
image data is captured by means of a camera (8) as the environmental information.

12. Parking assistance system (2) for performing a parking operation of a motor vehicle (1) into a transverse parking space (14), including a sensor device (4) for capturing environmental information to an environment (9) of the motor vehicle (1), and including a control device (3), which is adapted to detect the transverse parking space (14) depending on the environmental information and to deliver control signals (11) at least to a steering system (10) of the motor vehicle (1), by which the motor vehicle (1) is guided from a current position through an entry side (22) of the transverse parking space (14) into the transverse parking space (14), **characterized in that**
the control device (3) is adapted to detect a rear boundary (17) based on the environmental information, which bounds the transverse parking space (14) on a rear side (16) opposing the entry side (22) in parking space longitudinal direction (19) and to determine a target orientation of the motor vehicle (1) for a target position in the transverse parking space (14) based on the rear boundary (17).

13. Motor vehicle (1) with a parking assistance system (2) according to claim 12.

## Revendications

1. Procédé d'exécution d'un processus de stationnement d'un véhicule automobile (1) dans une place de stationnement transversale (14), au moyen d'un système d'aide au stationnement (2) du véhicule automobile (1), des informations de proximité sur un environnement (9) du véhicule automobile (1) étant saisies par le biais d'un dispositif de captage (4) du système d'aide au stationnement (2) et la place de stationnement transversale (14) étant détectée par le biais d'un dispositif de commande (3) du système d'aide au stationnement (2) en fonction des informations de proximité et des signaux de commande (11) étant délivrés au moins à un système de guidage (10) du véhicule automobile (1), par le biais desquels le véhicule automobile (1) est guidé d'une position actuelle, par le biais d'un côté entrée (22) de la place de stationnement transversale (14), dans la place de stationnement transversale (14),
**caractérisé en ce**
**qu'**une limitation arrière (17) est détectée par le biais du système d'aide au stationnement (2), à l'aide des informations de proximité, laquelle limite la place de stationnement transversale (14) sur un côté arrière (16), opposé au côté entrée (22), dans le sens longitudinal de la place de stationnement (19) et une orientation cible du véhicule automobile (1) est déterminée pour une position cible dans la place de stationnement transversale (14), à l'aide de la limitation arrière (17).

2. Procédé selon la revendication 1,
**caractérisé en ce que**
l'orientation cible est déterminée de telle sorte que l'axe longitudinal du véhicule (23) inclut, dans la position cible, avec la limitation arrière (17), un angle dans une plage de valeurs de 80° à 100°, en particulier dans une plage de valeurs de 85° à 95°.

3. Procédé selon la revendication 1 ou 2,
**caractérisé en ce**
**qu'**un objet longitudinal, en particulier une glissière de sécurité et / ou une paroi est détecté en tant que limitation arrière (17).

4. Procédé selon l'une des revendications précédentes,
**caractérisé en ce**
**qu'**un marquage, apposé sur un sol, est détecté en tant que limitation arrière (17).

5. Procédé selon l'une des revendications précédentes,
**caractérisé en ce**
**qu'**il est vérifié par le biais du dispositif de commande (3), à l'aide des informations de proximité, si la place de stationnement transversale (14), dans le sens transversal de la place de stationnement, est limitée par un objet latéral (24), lequel permet une détermination de l'orientation cible et :
- si l'objet latéral (24) est détecté, l'orientation cible est déterminée à l'aide de la limitation arrière (17) et / ou à l'aide de l'objet latéral (24) et
- si aucun objet latéral (24) n'est détecté, lequel permet la détermination de l'orientation cible, l'orientation cible seule est déterminée à l'aide de la limitation arrière (17).

6. Procédé selon l'une des revendications précédentes,
**caractérisé en ce que**
le processus de stationnement est exécuté par le biais du système d'aide au stationnement (2), à condition qu'une entrée de confirmation, entreprise par un conducteur sur un dispositif d'entrée, soit reçue, par le biais du dispositif de commande (3), par le biais de laquelle le processus de stationnement est activé.

7. Procédé selon l'une des revendications précédentes,
**caractérisé en ce**
**qu'**un parcours de stationnement (21) est calculé par le biais du dispositif de commande (3), de la position actuelle au moins vers une position intermédiaire entre la position actuelle et la position cible et que le véhicule automobile (1) est guidé le long du parcours de stationnement (21) calculé.

8. Procédé selon la revendication 7,
**caractérisé en ce que**,
si la place de stationnement transversale (14) est détectée à l'aide au moins d'une limitation (15, 24), limitant latéralement la place de stationnement transversale (14) dans le sens transversal de la place de stationnement et si la limitation arrière (17) n'est détectée que lors de la circulation sur le parcours de stationnement (21), le parcours de stationnement (21) est corrigé et / ou complété, après la détection de la limitation arrière (17), par le biais du dispositif de commande (3) à l'aide des informations de proximité actuelles.

9. Procédé selon la revendication 7 ou 8,
**caractérisé en ce que**,
pendant le processus de stationnement, le parcours de stationnement (21) est corrigé, en particulier corrigé en permanence, par le biais du dispositif de commande (3), à l'aide des informations de proximité actuelles.

10. Procédé selon l'une des revendications précédentes,
**caractérisé en ce que**
des valeurs de distance sont saisies en tant qu'informations de proximité, au moyen au moins d'un capteur de distance (5), en particulier au moyen d'une pluralité de capteurs de distance (5).

11. Procédé selon l'une des revendications précédentes,
**caractérisé en ce que**
des données image sont saisies en tant qu'informations de proximité, au moyen d'une caméra (8).

12. Système d'aide au stationnement (2), destiné à exécuter un processus de stationnement d'un véhicule automobile (1) dans une place de stationnement transversale (14), avec un dispositif de captage (4), destiné à saisir des informations de proximité relatives à un environnement (9) du véhicule automobile (1) et avec un dispositif de commande (3), conçu pour détecter la place de stationnement transversale (14) en fonction des informations de proximité et pour délivrer des signaux de commande (11) au moins à un système de guidage (10) du véhicule automobile (1), par le biais desquels le véhicule automobile (1) est guidé d'une position actuelle, par le biais d'un côté entrée (22) de la place de stationnement transversale (14), dans la place de stationnement transversale (14),
**caractérisé en ce que**
le dispositif de commande (3) est conçu pour détecter, à l'aide des informations de proximité, une limitation arrière (17), laquelle limite la place de stationnement transversale (14) sur un côté arrière (16), opposé au côté entrée (22), dans le sens longitudinal de la place de stationnement (19) et pour déterminer une orientation cible du véhicule automobile (1) pour une position cible dans la place de stationnement transversale (14), à l'aide de la limitation arrière (17).

13. Véhicule automobile (1) avec un système d'aide au stationnement (2) selon la revendication 12.
